# EUROPÄISCHE PATENTSCHRIFT

(11) **EP 1 559 619 B1**
(45) Veröffentlichungstag und Bekanntmachung des Hinweises auf die Patenterteilung: **30.05.2007**
(21) Anmeldenummer: 04025704.0
(22) Anmeldetag: 29.10.2004
(51) Int. Cl.: B60R 21/055, B60R 22/20, B60R 22/24

(54) **Vorrichtung zur stufenweisen Höhenverstellung eines Halte- oder Umlenkbeschlages eines Sicherheitsgurtes an einem hohlen Karosserieteil eines Kraftfahrzeugs**
Device for stepwise height adjustment of vehicle seat belt direction reversal fitting on a hollow chassis component of a vehicle
Dispositif de réglage en hauteur pas à pas du renvoi d'une ceinture de sécurité sur un pièce de carosserie creuse d'un vehicule

(30) Priorität: 27.01.2004 DE 102004003966
(43) Veröffentlichungstag der Anmeldung: 03.08.2005
(73) Patentinhaber: Dr.Ing. h.c. F. Porsche Aktiengesellschaft, 70435 Stuttgart (DE)
(72) Erfinder: Zierle, Matthias, 70794 Filderstadt (DE); Ohnmacht, Jürgen, 75050 Gemmingen (DE); Osswald, Markus, 72141 Walddorf-Häslach (DE)

(56) Entgegenhaltungen:
- EP-A- 1 132 264
- DE-A- 19 615 804
- DE-A- 19 630 498
- DE-A- 19 719 572
- DE-A- 19 822 696
- US-A- 6 106 012
- US-A1- 2002 060 452
- US-B1- 6 254 133

## Beschreibung

Die vorliegende Erfindung betrifft eine Vorrichtung zur stufenweisen Höhenverstellung eines Halte- oder Umlenkbeschlages eines Sicherheitsgurtes an einem hohlen Karosserieteil eines Kraftfahrzeugs, insbesondere an einer B- oder C-Säule, mit einer am Karosserieteil angebrachten Führungsschiene, einem entlang der Führungsschiene verschiebbaren und in definierten Verstellpositionen fixierbaren Schlitten mit einer Befestigungseinrichtung für den Halte- oder Umlenkbeschlag, wobei die hinter einer Säulenverkleidung angeordnete Führungsschiene über zwei mit Abstand zueinander verlaufende Befestigungen am Karosserieteil anbringbar ist.

Vorrichtungen der eingangs genannten Art, die in der Regel als Gurthöhenverstellvorrichtung bezeichnet werden, dienen zur Anpassung der Höhe des Umlenk- oder Befestigungspunktes eines Sicherheitsgurts an die Körpergröße eines zu sichernden Fahrzeuginsassen. Bei viertürigen Personenkraftwagen sind die Gurthöhenverstellvorrichtungen gewöhnlich im oberen Teil der B- und C-Säule angebracht. Zum Verstellen der Höhe des Beschlags wird der Schlitten zumeist durch Druck auf eine Abdeckkappe einer den Halte- oder Umlenkbeschlag mit dem Schlitten verbindenden Schraube entgegen der Kraft einer Feder in Richtung der Säule gedrückt, um die durch gegenseitigen Rasteingriff von Rastelementen des Schlittens und der Führungsschiene bewirkte Fixierung zu lösen, damit sich der Schlitten entlang der Führungsschiene in die gewünschte Verstellposition bewegen lässt. Bei einer anschließenden Druckentlastung der Abdeckkappe treten die Rastelemente erneut in gegenseitigen Rasteingriff, so dass der Schlitten in der gewählten Verstellposition festgehalten wird.

Derartige Vorrichtungen sind im Stand der Technik vielfach bekannt; beispielsweise wird auf die DE 198 22 696 A1 hingewiesen.

Sofern im Falle eines Unfalles eines damit ausgerüsteten Fahrzeuges beispielsweise seitliche Kräfte auf das Fahrzeug einwirken, besteht die Gefahr, dass der Kopf eines Kraftfahrzeuginsassen eine Querbewegung ausführt und auf den Bereich aufprallt, in dem der Umlenkbeschlag angeordnet ist. Hierbei können auf den Kopf des Kraftfahrzeuginsassen Belastungen einwirken, die oberhalb des zulässigen Grenzwertes liegen.

Aus der DE 197 19 572 A1 ist es bekannt, zwischen dem Sicherheitsgurt-Anlenkpunkt und dem Karosserieteil ein zur Energieabsorption bei einer Druckbeaufschlagung auf den Sicherheitsgurt-Anlenkpunkt ausgelegtes Deformationselement anzuordnen. Ein derartiges Deformationselement beansprucht in Fahrzeugquerrichtung gesehen einen relativ großen zusätzlichen Bauraum.

Aus der DE 196 15 804 C2 ist es bekannt, im Zwischenraum zwischen dem den Umlenkbeschlag haltenden Verstellteil und dem Karosserieteil, an welchem die Schiene befestigt oder befestigbar ist, ein Dämpfungsmittel anzuordnen, welches sich bei auf den Umlenkbeschlag einwirkenden aufprallbedingten Kräften am Verstellteil und Karosserieteil abstützt und hierbei zur Dämpfung der Aufprallenergie deformierbar ist. Zur Unterbringung eines derartigen Dämpfungsmittels ist ein entsprechender Bauraum vorzusehen.

Aus der gattungsbildenden US 2002/060452 A1 geht eine Vorrichtung zur stufenweisen Höhenverstellung eines Halte- oder Umlenkbeschlags eines Sicherheitsgurts an einem hohlen Karosserieteil eines Kraftfahrzeugs, insbesondere an einer B- oder C-Säule, mit einer am Karosserieteil angebrachten Führungsschiene, einem entlang der Führungsschiene verschiebbaren und in definierten Verstellpositionen fixierbaren Schlitten mit einer Befestigungseinrichtung für den Halte- oder Umlenkbeschlag hervor, wobei die hinter einer Säulenverkleidung angeordnete Führungsschiene über zwei mit Abstand zueinander verlaufende Befestigungen am Karosserieteil anbringbar ist.

Bei einem Kopfschlag eines Fahrzeuginsassen auf den Halte- oder Umlenkbeschlag ist ab einem definierten Kraftniveau die Führungsschiene und somit die gesamte Gurthöhenverstellvorrichtung unter Energieabsorption um eine durch die obere Befestigung der Führungsschiene gebildete Drehachse verschwenkbar und zwar in Fahrzeugquerrichtung. Bei dieser Anordnung ist zwischen einer die Führungsschiene aufnehmenden Trägerplatte und einer Säulenwand ein Deformationselement zwischengeschalten.

Eine derartige Vorrichtung ist auch aus DE-196 30 498 bekannt.

Aus der EP 1 132 264 A2 ist eine Vorrichtung für einen Gurthöhenversteller bekannt, wobei die Vorrichtung zur Energieabsorption bei einem Kopfaufprall zwischen einer Führungsschiene und/oder einer Trägerplatte und einer Seitenwand der Säule Deformationselemente in Form von kegelförmig ausgebildeten Deformationselementen aufweist.

Aufgabe der Erfindung ist es, eine Befestigung für eine gattungsgemäße Gurthöhenverstellvorrichtung so weiterzubilden, dass im Falle eines Kopfaufpralles auf den Halte- oder Umlenkbeschlag die auf den Kopf des Fahrzeuginsassen einwirkenden Belastungen unterhalb des zulässigen Grenzwertes liegen.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, dass bei einem Kopfaufschlag auf den Halte- oder Umlenkbeschlag bei einem definierten Kraftniveau die Gurthöhenverstellvorrichtung unter Energieabsorption um eine durch eine der beiden Befestigungen der Trägerschiene gebildete, in Fahrzeugquerrichtung verlaufende Drehachse seitlich verschwenkbar ist, wobei beim Verschwenken der Gurthöhenverstellvorrichtung Energie absorbiert wird und somit die auftretenden Kopfbelastungen unterhalb des zulässigen Grenzwertes liegen. Eine zusätzliche Energieabsorption kann darüber hinaus durch Verformung der vorgelagerten Säulenverkleidung erfolgen.

Im Ausführungsbeispiel schwenkt die Gurthöhenverstellvorrichtung um die obere Befestigung und zwar vom Fahrgastraum aus gesehen entgegen der Fahrtrichtung nach hinten. Die Gurthöhenverstellvorrichtung weicht also unter Energieabsorption seitlich in Längsrichtung des Fahrzeuges aus. Die Energieabsorption wird durch eine abgewinkelte säulenseitige Lasche gebildet, die sich beim Verschwenken der Führungsschiene der Gurthöhenverstellvorrichtung verbiegt bzw. verformt. Durch die Geometrie der Lasche (Länge, Breite, Dicke, Anstellwinkel) lässt sich das Kraftniveau festlegen, ab dem sich die Lasche beim Verschwenken der Führungsschiene verbiegt.

Im Folgenden wird die Erfindung anhand eines in der Zeichnung dargestellten Ausführungsbeispiels näher erläutert.
Es zeigen
- Fig. 1: eine auseinandergezogene perspektivische Ansicht einer erfindungsgemäßen an einer Säule angebrachten Gurthöhenverstellvorrichtung,
- Fig. 2: einen Schnitt nach der Linie II-II der Fig. 1 in größerer Darstellung durch die Säule,
- Fig. 3: eine perspektivische Ansicht auf die Türsäule mit der Führungsschiene in Einbaustellung,
- Fig. 4: einen Schnitt nach der Linie IV-IV der Fig. 3,
- Fig. 5: eine Ansicht ähnlich Fig. 3, jedoch mit verschwenkter Führungsschiene nach einem Kopfaufprall,
- Fig. 6: einen Schnitt nach der Linie VI-VI der Fig. 5,
- Fig. 7: eine Ansicht von innen auf die Türsäule, wobei die Lage der Haltezungen in beiden Endstellungen dargestellt ist.

Die in der Zeichnung dargestellte Gurthöhenverstellvorrichtung 1 für einen Sicherheitsgurt 2 eines Personenkraftwagens besteht im Wesentlichen aus einer hinter einer Säulenverkleidung 3 an einer Säule 4 des Personenkraftwagens montierten Führungsschiene 5, einem an der Führungsschiene 5 entlang verschiebbaren und in definierten Verstellpositionen auf der Führungsschiene 5 fixierbaren Schlitten 6, einem vor der Führungsschiene 5 über einer Aussparung der Säulenverkleidung 3 angebrachten Schieber 7 mit einer Durchgangsöffnung 8, einem Halte- oder Umlenkbeschlag 9 mit einem Führungsschlitz 10 für den Sicherheitsgurt 2, sowie einer die Durchgangsöffnung 8 des Schiebers 7 durchsetzenden, mit einer Abdeckkappe 11 verkleideten Halteschraube 12 zum Befestigen des Halte- oder Umlenkbeschlages 9 am Schlitten 6.

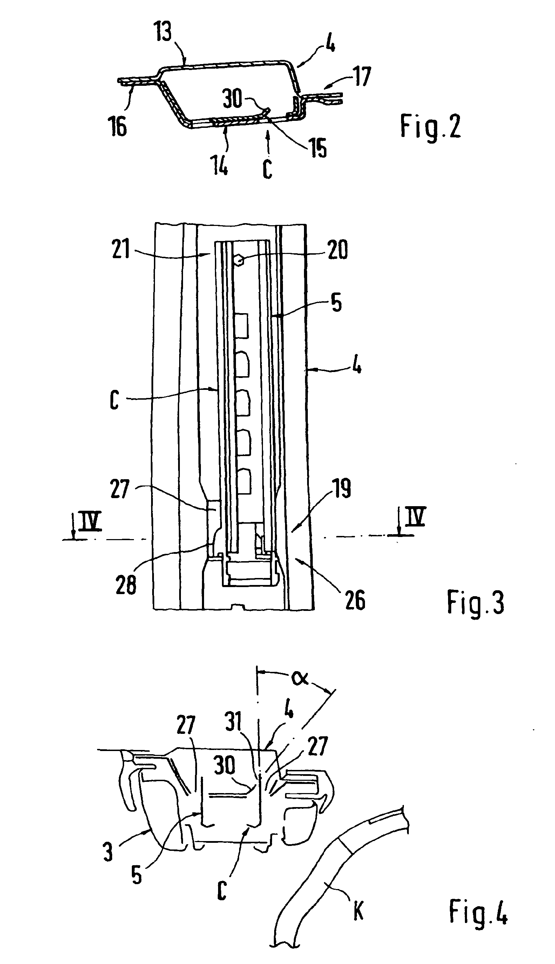

Wie in Fig. 2 dargestellt, besteht das als Halterung für die Führungsschiene 5 dienende, im Querschnitt vereinfacht trapezförmig dargestellte Teilstück der B- oder C-Säule 4 aus einem rinnenförmigen Außenblech 13, einem hutförmig profilierten Innenblech 14 und einem am Innenblech 14 befestigten inneren Verstärkungsblech 15. Das Außenblech 13 und das Innenblech 14 sind an gleichgerichteten endseitigen Flanschen 16, 17 durch Schweißen, Kleben oder dgl. miteinander verbunden. Auf die Flansche 16, 17 sind nicht näher dargestellte Dichtprofile aufgesteckt. Die Säule 4 bildet im Ausführungsbeispiel das hohle Karosserieteil.

Die hinter der Säulenverkleidung 3 angeordnete profilierte Führungsschiene 5 der Gurthöhenverstellvorrichtung 1 ist über zwei in Höhenrichtung gesehen mit Abstand zueinander verlaufende Befestigungen 18, 19 an der Säule 4 anbringbar.

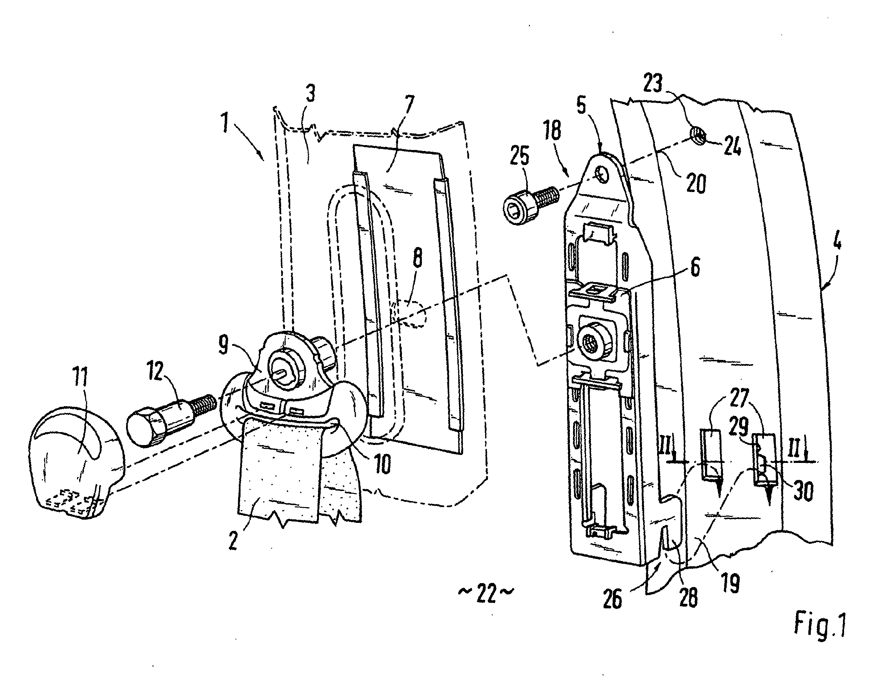

Erfindungsgemäß ist vorgesehen, dass bei einem Kopfaufschlag eines Fahrzeuginsassen auf den Halte- oder Umlenkbeschlag 9 ab einem definierten Kraftniveau die Führungsschiene 5 und somit die gesamte Gurthöhenverstellvorrichtung 1 unter Energieabsorption um eine durch eine der beiden Befestigungen 18, 19 der Führungsschiene 5 gebildete, in Fahrzeugquerrichtung verlaufende Drehachse 20 seitlich verschwenkbar ist. Im Ausführungsbeispiel ist die Führungsschiene 5 an ihrem oberen Ende 21 über eine die Befestigung 18 bildende Schraubbefestigung an der Säule 4 in Lage gehalten, wobei die Schraubbefestigung die ortsfeste Drehachse 20 beim Verschwenken der Führungsschiene 5 bildet. Die Schraubbefestigung weist auf dem einem Fahrgastraum 22 zugewandten Bereich des Innenblechs 14 und des Verstärkungsblechs 15 jeweils fluchtende Durchgangsbohrungen 23 auf, wobei auf einer hohlraumseitigen Oberfläche des Verstärkungsblechs 15 eine Schraubenmutter 24 für eine zur Befestigung der Führungsschiene 5 dienende Schraube 25 aufgeschweißt ist (Fig. 1).

Die Führungsschiene wirkt an ihrem unteren Ende 26 über zumindest eine die Befestigung 19 bildende Steckverbindung mit der Säule 4 zusammen. Die Steckverbindung 19 umfasst an der Säule 4 ein Paar von im Abstand angeordneten vertikalen Längsschlitzen 27, durch die sich jeweils eine hakenförmige Haltezunge 28 der Führungsschiene 5 einführen lässt, um die Führungsschiene 5 an der Säule 4 abzustützen, bevor sie mit der Schraube 25 befestigt wird.

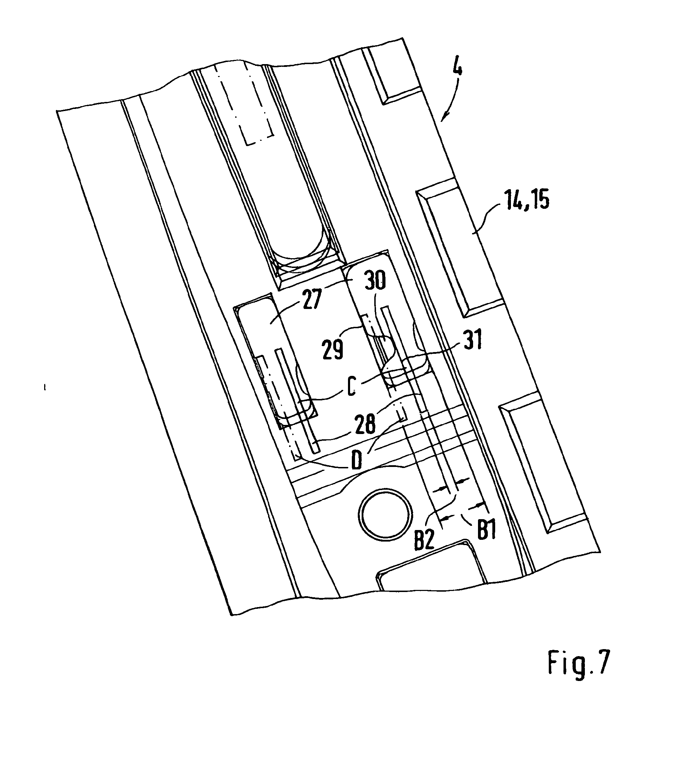

Die Längsschlitze 27 weisen - in Fahrzeuglängsrichtung gesehen - eine wesentlich größere Breite B1 auf, als die Dicke B2 der Haltezunge 28 (Fig. 7). Wenigstens an einer aufrechten Längsseite 29 eines der beiden Längsschlitze 27 der Säule 4 ist eine vorstehende abgewinkelte Lasche 30 ausgebildet, deren freies Ende sich an der angrenzenden Seitenwand 31 der Haltezunge 28 der Führungsschiene 5 abstützt, wobei sich bei einer kopfaufprallbedingten Schwenkbewegung der Führungsschiene 5 die Lasche 30 unter Energieabsorption, das heißt durch Verformungsarbeit, verbiegt bzw. verformt.

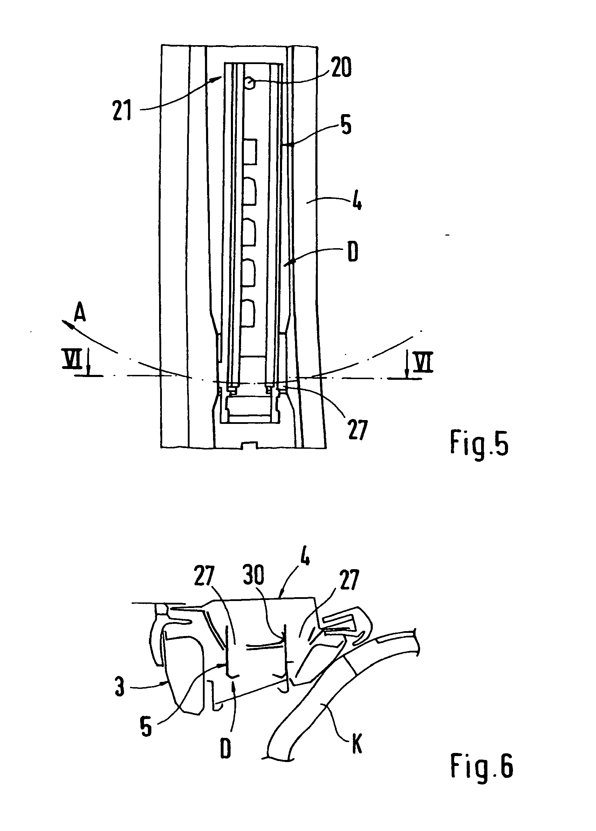

Die trapezförmig, halbkreisförmig oder dgl. ausgebildete Lasche 30 ist im Ausführungsbeispiel an einem inneren Verstärkungsblech 15 der Säule 4 angeordnet. Sie könnte jedoch auch am Innenblech 14 der Säule 4 vorgesehen sein. In der Einbaustellung C der Führungsschiene 5 verläuft die Lasche 30 und einem Winkel α von etwa 45° zu der angrenzenden Seitenwand 31 der Haltezunge 28. Der Winkel α beträgt im Ausführungsbeispiel etwa 45°; er kann jedoch auch kleiner oder größer als 45° sein. Die Lasche 30 ist nach innen in den Hohlraum der Säule 4 gerichtet (Fig. 2 und 4). Beim Verschwenken der Führungsschiene 5 in ihre Endlage D wird die Lasche 30 in Pfeilrichtung R gebogen und verläuft etwa parallel zur Seitenwand 31 der Haltezunge 28 (Fig. 6).

Im Fahrbetrieb verläuft der Kopf K eines Fahrzeuginsassen mit Abstand zum Halte- oder Umlenkbeschlag 9 der Gurthöhenverstellvorrichtung 1 (Fig. 4).

Bei einer Fahrzeugkollision, insbesondere kann sich der Kopf K des Fahrzeuginsassen zur Seite hin in Richtung der Gurthöhenverstellvorrichtung 1 bewegen und gelangt dann in Kontakt mit der Säulenverkleidung 3 bzw. dem Halte- oder Umlenkbeschlag 9 (Fig. 6). Durch die erfindungsgemäße Befestigung der Führungsschiene 5 der Gurthöhenverstellvorrichtung 1 an der Säule 4 wird erreicht, dass beim Kopfaufschlag zuerst durch Verformung der Säulenverkleidung 3 und danach durch Verformungsarbeit beim Verschwenken der Führungsschiene 5 Energie absorbiert wird, so dass die zulässigen Grenzwerte für den Kopfaufschlag zuverlässig unterschritten werden. Die Führungsschiene 5 schwenkt beim Kopfaufschlag um die obere in Fahrzeugquerrichtung verlaufende Drehachse 20 in Längsrichtung des Fahrzeuges und zwar in Richtung A entgegen der Fahrtrichtung F des Fahrzeuges.

## Patentansprüche

1. Vorrichtung zur stufenweisen Höhenverstellung eines Halte- oder Umlenkbeschlags (19) eines Sicherheitsgurts (2) an einem hohlen Karosserieteil (4) eines Kraftfahrzeugs, insbesondere an einer B- oder C-Säule, mit einer am Karosserieteil (4) angebrachten Führungsschiene (5), einem entlang der Führungsschiene verschiebbaren und in definierten Verstellpositionen fixierbaren Schlitten (6) mit einer Befestigungseinrichtung (12) für den Halte- oder Umlenkbeschlag (9), wobei die hinter einer Säulenverkleidung (3) angeordnete Führungsschiene (5) über zwei mit Abstand zueinander verlaufende Befestigungen (18, 19) am Karosserieteil (4) anbringbar ist und bei einem Kopfaufschlag eines Fahrzeuginsassen auf den Halte- oder Umlenkbeschlag (9) ab einem definierten Kraftniveau die Führungsschiene (5) und somit die gesamte Gurthöhenverstellvorrichtung unter Energieabsorption um eine durch die obere Befestigung der Führungsschiene gebildete Drehachse (20) seitlich verschwenkbar ist, **dadurch gekennzeichnet, dass** die Drehachse (20) in Fahrzeugquerrichtung verlauft und dass die Führungsschiene (5) bei einem Kopfaufschlag eines Fahrzeuginsassen seitlich in Längsrichtung des Fahrzeuges verschwenkbar

2. Vorrichtung nach Anspruch 1, **dadurch gekennzeichnet, dass** die Führungsschiene (5) an ihrem unteren Ende (26) über zumindest eine Steckverbindung (19) mit dem Karosserieteil (4) zusammenwirkt.

3. Vorrichtung nach Anspruch 2, **dadurch gekennzeichnet, dass** die Steckverbindung (19) am Karosserieteil (4) ein Paar von im Abstand angeordneten vertikalen Längsschlitzen (27) umfasst, durch die sich jeweils eine hakenförmige Haltezunge (28) der Führungsschiene (5) einführen lässt, wobei die Längsschlitze (27) in Fahrzeuglängsrichtung gesehen eine wesentlich größere Breite (B1) aufweisen, als die Dicke (B2) der Haltezunge (28).

4. Vorrichtung nach einem der vorangegangenen Ansprüche, **dadurch gekennzeichnet, dass** wenigstens an einer aufrechten Längsseite (29) eines Längsschlitzes (27) eine vorstehende, abgewinkelte Lasche (30) vorgesehen ist, deren freies Ende mit einer angrenzenden Seitenwand (31) der Haltezunge (28) zusammenwirkt, wobei sich bei einer Schwenkbewegung der Führungsschiene (5) um die Drehachse (20) die Lasche (30) unter Energieabsorption verbiegt.

5. Vorrichtung nach Anspruch 4, **dadurch gekennzeichnet, dass** die Lasche (30) an einem inneren Verstärkungsblech (15) und/oder am Innenblech (14) des Karosserieteils (4) ausgebildet ist.

6. Vorrichtung nach einem der vorangegangenen Ansprüche, **dadurch gekennzeichnet, dass** die Lasche (30) in der Einbaustellung der Führungsschiene (5) unter einem Winkel (α) zur Seitenwand (31) der Haltezunge (28) verläuft.

## Claims

1. A device for the stepwise height adjustment of a holding or deflection fitting (19) [*sic* - *recte* 9] of a safety belt (2) on a hollow body part (4) of a motor vehicle, especially on a B or C pillar, with a guide rail (5) mounted on the body part (4), a slide (6) which is displaceable along the guide rail and is fixable in defined adjustment positions and has a fastening device (12) for the holding or deflection fitting (9), wherein the guide rail (5), which is arranged behind a pillar lining (3), is mountable on the body part (4) by means of two fastenings (18, 19) which extend with mutual spacing and, starting from a defined force level, the guide rail (5) and therefore the entire belt-height adjusting device is laterally pivotable about a rotation axis (20), formed by the upper fastening of the guide rail, with absorption of energy if a vehicle occupant's head strikes the holding or deflection fitting (9), **characterised in that** the rotation axis (20) extends in the vehicle transverse direction and **in that** the guide rail (5) is laterally pivotable in the longitudinal direction of the vehicle if it is struck by a vehicle occupant's head.

2. A device according to claim 1, **characterised in that** the guide rail (5) co-operates at its lower end (26) with the body part (4) via at least one plug-in connection (19).

3. A device according to claim 2, **characterised in that** the plug-in connection (19) on the body part (4) comprises a pair of spaced, vertical, longitudinal slots (27), through which a respective hook-shaped holding tongue (28) of the guide rail (5) can be inserted, wherein the longitudinal slots (27), seen in the vehicle longitudinal direction, have a substantially greater width (B1) than the thickness (B2) of the holding tongue (28).

4. A device according to any one of the preceding claims, **characterised in that** a projecting, bent tab (30) is provided on at least one upright longitudinal side (29) of a longitudinal slot (27) and its free end co-operates with an adjacent side wall (31) of the holding tongue (28), wherein the tab (30) deforms with absorption of energy in the event of a pivoting movement of the guide rail (5) about the rotation axis (20).

5. A device according to claim 4, **characterised in that** the tab (30) is formed on an inner reinforcing plate (15) and / or on the inner panel (14) of the body part (4).

6. A device according to any one of the preceding claims, **characterised in that** the tab (30) extends at an angle (α) to the side wall (31) of the holding tongue (28) in the mounted position of the guide rail (5).

## Revendications

1. Dispositif pour le réglage en hauteur progressif d'un accessoire de retenue ou de renvoi (19) d'une ceinture de sécurité (2) sur une partie de carrosserie (4) creuse d'un véhicule, en particulier sur un montant B ou C, avec un rail de guidage (5) placé sur la partie de carrosserie (4), un chariot (6) pouvant coulisser le long du rail de guidage et pouvant être fixé dans des positions de réglage définies avec un dispositif de fixation (12) pour l'accessoire de retenue ou de renvoi (9), le rail de guidage (5) disposé derrière un habillage de montant (3) pouvant être placé au moyen de deux fixations (18, 19) disposées à distance l'une de l'autre sur la partie de carrosserie (4) et dans le cas d'un impact de la tête d'un passager du véhicule sur l'accessoire de retenue ou de renvoi (9) et à partir d'un niveau de force défini, le rail de guidage (5) et donc l'ensemble du dispositif de réglage de hauteur de ceinture peuvent basculer latéralement avec l'absorption d'énergie autour d'un axe de rotation (20) formé par la fixation supérieure du rail de guidage, **caractérisé en ce que** l'axe de rotation (20) est agencé dans le sens transversal du véhicule et **en ce que** le rail de guidage (5) peut basculer latéralement dans le sens longitudinal du véhicule dans le cas d'un impact de la tête d'un passager du véhicule.

2. Dispositif selon la revendication 1, **caractérisé en ce que** le rail de guidage (5) coopère sur son extrémité (26) inférieure au moyen d'au moins une liaison par emboîtement (19) avec la partie de carrosserie (4).

3. Dispositif selon la revendication 2, **caractérisé en ce que** la liaison par emboîtement (19) comprend sur la partie de carrosserie (4) une paire de fentes longitudinales (27) verticales disposées à distance, par lesquelles à chaque fois une languette de retenue (28) en forme de crochet du rail de guidage (5) peut être introduite, les fentes longitudinales (27) présentant, vues dans le sens longitudinal du véhicule, une largeur (B1) nettement plus grande que l'épaisseur (B2) de la languette de retenue (28).

4. Dispositif selon l'une quelconque des revendications précédentes, **caractérisé en ce qu'**une patte (30) saillante et coudée est prévue au moins sur un côté longitudinal (29) vertical d'une fente longitudinale (27), patte dont l'extrémité libre coopère avec une paroi latérale (31) contiguë de la languette de retenue (28), la patte (30) se pliant avec absorption d'énergie lors d'un mouvement de basculement du rail de guidage (5) autour de l'axe de rotation (20).

5. Dispositif selon la revendication 4, **caractérisé en ce que** la patte (30) est réalisée sur une tôle de renfort (15) intérieure et/ou sur la tôle intérieure (14) de la partie de carrosserie (4).

6. Dispositif selon l'une quelconque des revendications précédentes, **caractérisé en ce que** la patte (30) est agencée dans la position de montage du rail de guidage (5) en formant un angle (α) par rapport à la paroi latérale (31) de la languette de retenue (28).
